Europäisches Patentamt

European Patent Office

Office européen des brevets

(19)

(11) Veröffentlichungsnummer : **0 036 037**
**B1**

(12) EUROPÄISCHE PATENTSCHRIFT

(45) Veröffentlichungstag der Patentschrift :
23.05.84

(51) Int. Cl.³ : **H 04 B  7/08, H 04 B  7/26**

(21) Anmeldenummer : **80106942.8**

(22) Anmeldetag : **11.11.80**

(54) **Sende-Empfangs-Diversity-Anlage.**

(30) Priorität : **06.03.80 DE 3008529**

(43) Veröffentlichungstag der Anmeldung :
**23.09.81 Patentblatt 81/38**

(45) Bekanntmachung des Hinweises auf die Patenterteilung : **23.05.84 Patentblatt 84/21**

(84) Benannte Vertragsstaaten :
**AT DE FR GB IT NL**

(56) Entgegenhaltungen :
**DE-A- 2 538 309**
**DE-A- 2 558 557**
**US-A- 3 824 470**
**US-A- 3 916 316**

(73) Patentinhaber : **ROBERT BOSCH GMBH**
**Postfach 50**
**D-7000 Stuttgart 1 (DE)**

(72) Erfinder : **Dallmann, Horst**
**Wiersichweg 5**
**D-1000 Berlin 13 (DE)**
Erfinder : **Gätjens, Sigurd, Dipl.-Ing.**
**Sandstrasse 30**
**D-1000 Berlin 20 (DE)**

(74) Vertreter : **Schmidt, Hans-Ekhardt et al**
**Robert Bosch GmbH Geschäftsbereich Elektronik**
**Patent- und Lizenzabteilung Forckenbeckstrasse**
**9-13**
**D-1000 Berlin 33 (DE)**

**Beschreibung**

Stand der Technik

Die Erfindung geht aus von einer Sende-Empfangs-Diversity-Anlage nach dem Oberbegriff des Hauptanspruchs.

Aus der DE-AS 22 38 342 ist eine solche Auswerteeinrichtung in einer Funkzentrale für mehrere ortsfeste Empfangsstationen bekannt, die so ausgebildet ist, daß jeweils der Übertragungsweg Empfangsstation/Zentrale mit dem besten Signal/Rauschverhältnis durchgeschaltet und die anderen Wege abgeschaltet werden.

Nachteil dieser bekannten Anordnung ist, daß unabhängig von den Gegebenheiten des Sendegebietes geschaltet wird, wobei insbesondere die Bewertung des Signal/Rauschverhältnisses der einzelnen Empfangsstationen nicht berücksichtigt, ob beispielsweise eine Empfangsstation in der Mitte oder am Rande des Sendegebietes liegt. Außerdem bildet die bekannte Vorrichtung das Signal/Rauschverhältnis aus dem zur Zentrale übertragenen Sprachband der einzelnen Empfangsstationen, wodurch Fehlbewertungen aufgrund der im Sprachband auftretenden Klirrprodukte möglich sind.

Vorteile der Erfindung

Die erfindungsgemäße Sende-Empfangs-Diversity-Anlage mit den kennzeichnenden Merkmalen des Hauptanspruchs hat demgegenüber den Vorteil, daß die Bewertung des Signal/Rauschverhältnisses in der Zentraleinheit derart erfolgt, daß abhängig von den Gegebenheiten des Sendegebietes eine Bewertung für jede Sende-Empfangsstation getrennt erfolgt. Hierdurch ist es möglich, auch bei späteren Änderungen der Betriebsbedingungen die Bewertung zentral neu abzugleichen, ohne jede Station vor Ort neu einstellen zu müssen.

Durch die in den Unteransprüchen angegebenen Maßnahmen sind vorteilhafte Weiterbildungen und Verbesserungen der im Hauptanspruch angegebenen Anlage möglich. So ist es vorteilhaft, daß das Bewertungssignal aus einem Frequenzband weit oberhalb des übertragenen Sprachbandes gewonnen wird, wodurch die Klirrprodukte, die im Sprachband noch vorhanden sind, herausfallen.

Von Vorteil ist weiter, daß das dem Signal/Rauschverhältnis entsprechende Bewertungssignal in den Sende-Empfangsstationen digitalisiert und beispielsweise mittels Frequenz- oder Phasenumtastung zur Auswahleinheit, vorzugsweise im oberen Bereich des übertragenen Sprachbandes, übertragen wird. Dadurch kann das Bewertungssignal auch über gleichstromundurchlässige Strecken ohne zusätzliche Informationskanäle übertragen werden.

Zeichnung

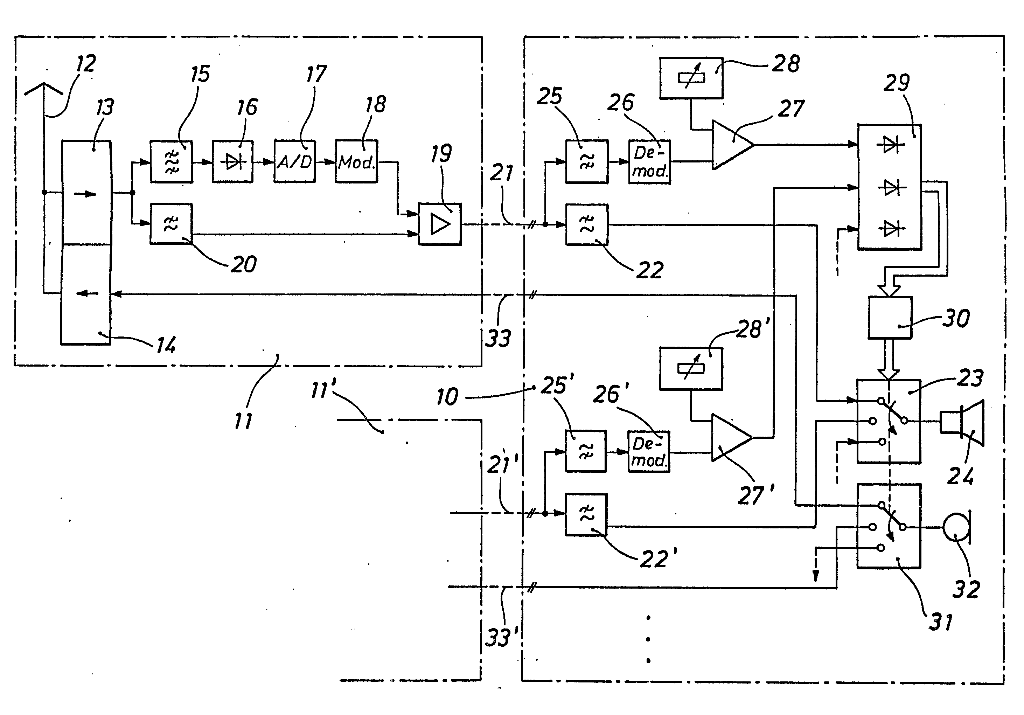

Die Erfindung ist in der Zeichnung dargestellt und in der nachfolgenden Beschreibung näher erläutert. Die einzige Figur zeigt den Stromlaufplan einer Ausführungsform einer erfindungsgemäß Sende-Empfangs-Diversity-Anlage.

Beschreibung des Ausführungsbeispiels

In der Figur ist mit 10 eine ortsfeste Zentraleinheit bezeichnet, die vorzugsweise über fest verdrahtete Leitungen mit mehreren Sende-Empfangsstationen 11, 11' in Verbindung steht, von denen aus Gründen der Übersichtlichkeit in der Figur nur eine im einzelnen dargestellt ist. Die Sende-Empfangsstation 11 steht ihrerseits mit mehreren Mobilstationen, beispielsweise Kraftfahrzeugen, in Verbindung. Die Sende-Empfangsstation 11 weist eine Antenne 12 auf, die mit einem Empfänger 13 und einem Sender 14 in Verbindung steht. Der Diskriminator-Ausgang des Empfängers 13 ist einerseits an ein Bandpaßfilter 15 angeschlossen, dem ein Gleichrichter 16, ein Analog/Digital-Wandler 17 und ein Modulator 18 nachgeschaltet sind, dessen Ausgang auf einen Eingang eines Summierverstärkers 19 geführt ist. Der andere Eingang des Summierverstärkers 19 steht mit einem Tiefpaßfilter 20 in Verbindung, das eingangsseitig ebenfalls mit dem Diskriminator-Ausgang des Empfängers 13 verbunden ist. Der Ausgang des Summierverstärkers 19 steht über eine Zweidrahtleitung 21 einmal mit einem Tiefpaßfilter 22 in Verbindung, das über eine erste Auswahleinheit 23 mit einem Lautsprecher 24 in Wirkungsverbindung steht, und zum anderen mit einem Hochpaßfilter 25, an das ein Demodulator 26 angeschlossen ist, der mit einem Eingang eines Komparators 27 verbunden ist. Der andere Eingang des Komparators 27 ist mit einem Sollwertgeber 28 abgeschlossen. Der Ausgang des Komparators 27 führt auf eine Höchstwert-Auswahlstufe 29, deren Ausgang über einen Zwischenspeicher 30 mit dem Steuereingang der ersten Auswahleinheit 23 verbunden ist. Der Ausgang des Zwischenspeichers 30 steuert in gleicher Weise eine zweite Auswahleinheit 31, durch die ein Mikrofon 32 über eine Zweidrahtleitung 33 zum Sender 14 der Sende-Empfangsstation 11 schaltbar ist. Die Höchstwert-Auswahlstufe 29, die erste Auswahleinheit 23 und die zweite Auswahleinheit 31 weisen eine Vielzahl von Eingangsanschlüssen auf, die der Anzahl der jeweils vorhandenen Sende-Empfangsstationen 11, 11' entspricht. Dabei ist beispielsweise der zweite Eingang der Höchstwert-Auswahlstufe 29 an den Ausgang eines Komparators 27' angeschlossen, der dem bereits erwähnten Komparator 27 entspricht, jedoch der zweiten Sende-Empfangsstation 11' zugeordnet ist. In entsprechender Weise finden sich analog zu den beschriebenen Elementen 22, 25, 26, 28 Elemente 22', 25', 26', 28' bzw. Zweidrahtleitungen 21', 33', die der zweiten Sende-Empfangsstation 11' zugeordnet sind. Die Höchstwert-Auswahlstufe 29, die erste Auswahleinheit 23 und die zweite Auswahleinheit 31 sind im dargestellten Beispiel für drei Sende-Empfangsstationen 11, 11' usf. ausgelegt, es versteht sich jedoch von selbst, daß eine beliebige Anzahl von Sende-Empfangsstationen zusammen mit der Zentraleinheit 10 betrieben werden kann.

Die Wirkungsweise der in der Figur dargestellten Anlage ist wie folgt:

Durch die Antenne 12 wird ein Signal von einer Mobilstation empfangen und dem Empfänger 13 zugeleitet, der einen Diskriminator-Ausgang aufweist, dessen Ausgangssignal auf das Bandpaßfilter 15 und das Tiefpaßfilter 20 gelangt. Im Tiefpaßfilter 20 wird das zu übertragende Sprachband herausgefiltert und im Bandpaßfilter 15 ein Band weit oberhalb des übertragenen Sprachbandes, das zur Bildung des Signal/Rauchverhältnisses und damit des Bewertungssignales herangezogen wird. Das Bewertungssignal wird anschließend im Gleichrichter 16 gleichgerichtet, im Analog/Digital-Wandler 17 digitalisiert und im Modulator 18 moduliert.

Als Modulationsverfahren werden erfindungsgemäß bevorzugt binäre Übertragungsverfahren, insbesondere Frequenzumtastung (FSK) oder Phasenumtastung (PSK), verwendet. Hierzu werden Datentelegramme gebildet, die mit einem Telegrammwort beginnen, das an erster Stelle ein Startbit einer Polarität aufweist, die der ersten Frequenz bzw. Phase der Umtastung entspricht. An das Startbit schließen sich mehrere das Bewertungssignal charakterisierende Bits an. Durch die festgelegte Polarität des Startbits wird dabei bewirkt, daß eine Erkennung möglich ist, daß ein Telegrammwort folgt. An das Telegrammwort schließt sich eine Übertragungspause an, deren Bits die Polarität der zweiten Frequenz bzw. Phase der Umtastung haben. Die Übertragungspause wird dabei gleich der Dauer des Telegrammwortes gewählt, so daß während der Übertragungspause eine Synchronisation möglich ist, falls es bei der Übertragung des Telegrammwortes zu Synchronisationsfehlern gekommen sein sollte.

Das in der beschriebenen Weise gebildete Bewertungssignal wird parallel mit dem Sprachsignal, das am Ausgang des Tiefpaßfilters 20 anliegt, auf den Summierverstärker 19 gegeben und über die Zweidrahtleitung 21 zur Zentraleinheit 10 übertragen. In der Zentraleinheit 10 werden die beiden Bänder wieder getrennt, wobei das übertragene Sprachband durch das Tiefpaßfilter 22 herausgefiltert und über die erste Auswahleinheit 23 dem Lautsprecher 24 zugeleitet wird. Das Bewertungssignal kann in einfacher Weise durch das Hochpaßfilter 25 aus dem übertragenen Signal abgetrennt und dem Demodulator 26 zugeleitet werden, an dessen Ausgang das Bewertungssignal wieder in analoger oder digitaler Form zur Verfügung steht. Das Bewertungssignal wird nunmehr im Komparator 27 mit einem vom Sollwertgeber 28 kommenden Sollwert verglichen und, wenn der Sollwert überschritten wird, auf die Höchstwert-Auswahlstufe 29 weitergeleitet. In der Höchstwert-Auswahlstufe 29 wird erkannt, welcher Signalweg die beste Signalqualität aufweist, und dementsprechend werden über den Zwischenspeicher 30 die Auswahleinheiten 23 für den Empfangsweg und 31 für den Sendeweg geschaltet, im dargestellten Ausführungsbeispiel sind Lautsprecher 24 und Mikrofon 32 auf die Sende-Empfangsstation 11 durchgeschaltet. Der Zwischenspeicher 30 bewirkt dabei, daß der Signalweg mit der besten Signalqualität solange durchgeschaltet bleibt, bis die Höchstwert-Auswahlstufe 29 einen anderen Signalweg mit der besten Signalqualität erkennt und entsprechend die Auswahleinheiten 23, 31 weiterschaltet, so zum Beispiel, wenn eine Mobilstation ihre Position im Sendegebiet verändert.

Da Änderungen des Signal/Rauchverhältnisses bei kleinen Werten weniger wahrgenommen werden als bei großen Werten, weist der Analog/Digital-Wandler 17 in einer bevorzugten Ausführungsform der Erfindung eine progressive Kennlinie auf, so daß das in Stufen übertragene Bewertungssignal in der Art gewichtet wird, daß die Stufen zu größeren Signal/Rauchverhältnissen hin gröber werden.

## Ansprüche

1. Sende-Empfangs-Diversity-Anlage mit einer Zentraleinheit und mehreren, vorzugsweise ortsfesten Sende-Empfangsstationen, die über Signalwege, vorzugsweise fest verdrahtete Leitungen, mit der Zentraleinheit verbunden sind, und mit einer Vielzahl von Mobilstationen, wobei die Qualität der in den Sende-Empfangsstationen empfangenen signale in der Zentraleinheit bewertet wird und der Signalweg von den Sende-Empfangsstationen zu einem Lautsprecher bzw. Mikrofon der Zentraleinheit durchgeschaltet wird, dessen Empfangssignal das qualitativ beste ist, dadurch gekennzeichnet, daß in den Sende-Empfangsstationen (11, 11') ein dem Signal/Rauchverhältnis proportionales Bewertungssignal gebildet, dieses zur Zentraleinheit (10) übertragen und dort jeweils mit einem für jede Sende-Empfangsstation (11, 11') getrennt einstellbaren, vorgegebenen Wert verglichen wird.

2. Anlage nach Anspruch 1, dadurch gekennzeichnet, daß zur Gewinnung des Bewertungssignals in der Sende-Empfangsstation (11, 11') einem Diskriminator ein Filter (15), ein Gleichrichter (16) und ein Analog/Digital-Wandler (17) nachgeschaltet sind, wobei das Filter (15) derart ausgelegt ist, daß aus dem vom Diskriminator abgegebenen Signal ein Frequenzband weit oberhalb des übertragenen Sprachbandes herausgefiltert und aufbereitet wird.

3. Anlage nach einem der vorhergehenden Ansprüche, dadurch gekennzeichnet, daß das Bewertungssignal im oberen Bereich, vorzugsweise in den oberen 20 %, des übertragenen Sprachbandes zur Zentraleinheit (10) übertragen wird.

4. Anlage nach Anspruch 2 oder 3, dadurch gekennzeichnet, daß das digitalisierte Bewertungssignal mittels eines binären Übertragungsverfahrens zur Zentraleinheit (10) übertragen wird.

5. Anlage nach Anspruch 4, dadurch gekennzeichnet, daß das digitalisierte Bewertungssignal mittels Frequenzumtastung (FSK) zur Zentraleinheit (10) übertragen wird.

6. Anlage nach Anspruch 4, dadurch gekennzeichnet, daß das digitalisierte Bewertungssignal mittels Phasenumtastung (PSK) zur Zentraleinheit (10) übertragen wird.

7. Anlage nach einem der Ansprüche 2 bis 6, dadurch gekennzeichnet, daß das Bewertungssignal in Stufen übertragen wird, wobei die Stufen zu größeren Signal/Rauschverhältnissen gröber werden.

8. Anlage nach einem der Ansprüche 4 bis 7, dadurch gekennzeichnet, daß das Bewertungssignal innerhalb eines Datentelegrammes übertragen wird, wobei das Datentelegramm ein Starbit mit der der ersten Frequenz bzw. Phase der Umtastung entsprechenden Startpolarität aufweist.

9. Anlage nach Anspruch 8, dadurch gekennzeichnet, daß das Datentelegramm die zur Synchronisation dienende Übertragungspause zwischen zwei Datentelegrammen mit der der zweiten Frequenz bzw. Phase der Umtastung entsprechenden Stoppolarität aufweist, die mindestens gleich der Dauer des Telegrammwortes ist.

## Claims

1. A transmit-receive diversity system comprising a central unit and a plurality of preferably fixed transmit-receive stations which are connected to the central unit by way of signal paths, preferably permanently wired lines, and a plurality of mobile stations, and the quality of the signals received in the transmit-receive stations is evaluated in the central unit and the signal path whose reception signal has the best quality is switched from the transmit-receive stations to a loudspeaker or microphone of the central unit, characterised in that an evaluation signal proportional to the signal-to-noise ratio is formed in the transmit-receive stations (11, 11') and is transmitted to the central unit (10) where it is compared in each case with a predetermined value which is separately adjustable for each transmit-receive station (11, 11').

2. A system as claimed in claim 1, characterised in that, for the purpose of obtaining the evaluation signal in the transmit-receive station (11, 11'), a filter (15), a rectifier (16) and an analog-to-digital converter (17) are connected to the output of a discriminator, the filter (15) being designed such that a frequency band far above the transmitted speech band is filtered out of the signal produced by the discriminator and processed.

3. A system as claimed in one of the preceding claims, characterised in that the evaluation signal is transmitted to the central unit (10) in the upper range, preferably in the upper 20 %, of the transmitted speech band.

4. A system as claimed in claim 2 or 3, characterised in that the digitalized evaluation signal is transmitted to the central unit (10) by means of a binary transmission technique.

5. A system as claimed in claim 4, characterised in that the digitalized evaluation signal is transmitted to the central unit (10) by means of frequency shift keying (FSK).

6. A system as claimed in claim 4, characterised in that the digitalized evaluation signal is transmitted to the central unit (10) by means of phase shift keying (PSK).

7. A system as claimed in one of the claims 2 to 6, characterised in that the evaluation signal is transmitted in stages, the stages to larger signal-to-noise ratios becoming coarser.

8. A system as claimed in one of the claims 4 to 7, characterised in that the evaluation signal is transmitted within a data telegram, the data telegram having a starting bit with the starting polarity corresponding to the first frequency or phase of the shift keying.

9. A system as claimed in claim 8, characterised in that the data telegram has a transmission pause, which serves for synchronization and which is at least equal to the duration of the telegram word, between two data telegrams having the stopping polarity which corresponds to the second frequency or phase of the shift keying.

## Revendications

1. Installation d'émission et de réception simultanées avec une unité centrale et plusieurs stations émettrices-réceptrices de préférence fixes, qui sont en communication avec l'unité centrale par l'intermédiaire de trajets de signaux, de préférence des liaisons câblées de façon fixe, et avec une pluralité de stations mobiles, la qualité des signaux reçus dans les stations émettrices-réceptrices étant évaluée dans l'unité centrale et le trajet des signaux à partir des stations émettrices-réceptrices, pour lequel le signal de réception est qualitativement le meilleur, est branché sur un haut-parleur ou bien un microphone de l'unité centrale, installation caractérisée en ce que dans les stations émettrices-réceptrices (11, 11') est formé un signal d'évaluation proportionnel au rapport signal/bruit, ce signal d'évaluation étant transmis à l'unité centrale (10) où il est respectivement comparé avec une valeur prédéfinie séparément réglable pour chaque station émettrice-réceptrice (11, 11').

2. Installation selon revendication 1, caractérisée en ce que pour obtenir le signal d'évaluation dans la station émettrice-réceptrice (11, 11') un discriminateur, un filtre (15), un redresseur (16), et un convertisseur analogique/numérique (17) sont branchés à la suite, le filtre (15) étant prévu de façon qu'à partir du signal délivré par le discriminateur, une bande de fréquence se situant largement au-dessus de la bande vocale transmise, soit filtrée et traitée.

3. Installation selon l'une des revendications précédentes, caractérisée en ce que le signal d'évaluation est transmis à l'unité centrale (10) dans la zone supérieure, de préférence dans les 20 % supérieurs, de la bande vocale transmise.

4. Installation selon revendication 2 ou 3, caractérisée en ce que le signal d'évaluation mis sous forme numérique est transmis à l'unité centrale (10) au moyen d'un procédé binaire de transmission.

5. Installation selon revendication 4, caractérisée en ce que le signal d'évaluation mis sous forme numérique est transmis à l'unité centrale (10) par manipulation de fréquences (FSK).

6. Installation selon revendication 4, caractérisée en ce que le signal d'évaluation mis sous forme numérique est transmis à l'unité centrale (10) par manipulation de phases (PSK).

7. Installation selon une des revendications 2 à 6, caractérisée en ce que le signal d'évaluation est transmis par paliers, les paliers devenant plus importants pour des rapports signal/bruit plus importants.

8. Installation selon une des revendications 4 à 7, caractérisée en ce que le signal d'évaluation est transmis à l'intérieur d'un télégramme de données, ce télégramme de données comportant un chiffre binaire de démarrage avec la polarité de démarrage correspondant à la première fréquence ou bien à la première phase de la manipulation.

9. Installation selon revendication 8, caractérisée en ce que le télégramme de données comporte une pause de transmission, servant à la synchronisation, entre deux télégrammes de données, avec la polarité d'arrêt correspondant à la seconde fréquence ou bien à la seconde phase de la manipulation, cette pause étant au moins égale à la durée du mot de télégramme.

0 036 037